# EUROPEAN PATENT SPECIFICATION

(11) **EP 3 564 698 B1**
(45) Date of publication and mention of the grant of the patent: **06.11.2024**
(21) Application number: 18170394.3
(22) Date of filing: 02.05.2018
(51) Int. Cl.: G01S 7/02, G01S 3/02, G01S 7/41

(54) **METHOD FOR CLASSIFYING ELECTROMAGNETIC SIGNALS AND ANALYSING SYSTEM**
VERFAHREN ZUR KLASSIFIZIERUNG ELEKTROMAGNETISCHER SIGNALE UND ANALYSESYSTEM
PROCÉDÉ DE CLASSIFICATION DE SIGNAUX ÉLECTROMAGNÉTIQUES ET SYSTÈME D'ANALYSE

(43) Date of publication of application: 06.11.2019
(73) Proprietor: Rohde & Schwarz GmbH & Co. KG, 81671 München (DE)
(72) Inventor: GUEZELARSLAN, Baris, 85521 Ottobrunn (DE)
(74) Representative: Novagraaf Group

(56) References cited:
- US-A- 5 276 772
- US-A- 5 812 083
- US-A1- 2005 265 629
- US-A1- 2016 034 810
- GONDARA LOVEDEEP: "Medical Image Denoising Using Convolutional Denoising Autoencoders", 2016 IEEE 16TH INTERNATIONAL CONFERENCE ON DATA MINING WORKSHOPS (ICDMW), IEEE, 12 December 2016 (2016-12-12), pages 241 - 246, XP033055819, DOI: 10.1109/ICDMW.2016.0041

## Description

The invention relates to a method as well as an analysing system for classifying electromagnetic signals.

In measurements of electromagnetic signals, there are several possible sources of errors. For instance, there are statistical measurement uncertainties that may alter the characteristics of the measured signal. Moreover, there may be methodical uncertainties, e.g. parts of the electromagnetic signal are missed and therefore not measured at all. Moreover, perturbations like background noise or other kinds of distortions may be present.

All these error sources complicate a classification of the electromagnetic signals. Employing methods known from the state of the art, the classification may even be completely hindered by these error sources.

US 5 812 083 A discloses a method for classifying a device by recognizing distorted signals emanating from the device using several neural networks, wherein the distorted signal may be a RF antenna pattern.

US 5 276 772 A discloses an architecture for an adaptive probabilistic neural network.

US 2005 0 265 629 A1 discloses a method for filtering out noise from a signal by using pattern recognition in the wavelet domain. For example, an artificial neural network may be pre-trained to filter out the noise.

The object of the invention therefore is to mitigate influences from error sources on the classification of electromagnetic signals

According to the invention, the problem is solved by a method for classifying electromagnetic signals according to claim 1.

Perturbations may be removed from the measurement signal to provide the modified measurement signal by using the at least one machine learning module, wherein the artificial neural network system is used to remove the perturbations from the measurement signal, and wherein the neural network system is configured to remove the perturbations from the measurement signal by applying pattern recognition techniques to the measurement signal.

The term "perturbations" is to be understood to include interferences, background noise, glitches, or any other kinds of distortions present in the measurement signal.

The term "complement with information missing in the measurement signal" is to be understood such that information about the signal (e.g. certain characteristics) is added to the measurement signal and/or missing parts of the measurement signal are added.

By first adding information missing in the measurement signal and/or removing perturbations from the measurement signal, the subsequent classification of the electromagnetic signal is greatly simplified and made more reliable. Thus, the influence of error sources on the classification is effectively mitigated or even eliminated.

Artificial neural networks are particularly suitable for this kind of operation and enable a fast and reliable complementation of the missing information.

The classification may be done by a machine learning module, in particular by the same machine learning module that complements the measurement signal with the missing information and/or removes perturbations from the measurement signal.

According to one aspect, the electromagnetic signal is a radar-signal. In other words, the method is used for classifying electromagnetic signals with frequencies within the range suitable for radar applications. The information missing may relate to signal portions of the radar-signal.

According to another aspect, the measurement signal comprises one or more pieces of information selected from the group of radio frequency, pulse width, pulse repetition time and direction of arrival. These pieces of information are most suitable for classifying the electromagnetic signal.

The measurement signal may further comprise information about a time evolution of one or more of these quantities.

In a certain embodiment, the information added to the measurement signal is selected from the group of radio frequency, pulse width, pulse repetition time and direction of arrival. Of course, also information about two or more of these quantities may be added to the measurement signal. Thereby, information that is vital for a correct classification of the electromagnetic signal is added and the reliability of the subsequent classification is greatly enhanced.

Since information missing may be added prior to the classification, missing information with regard to one or more of these pieces of information may be added prior to the classification.

Thereby, the neural network system may comprise only one artificial neural network. Alternatively, the artificial neural network system may comprise several artificial neural networks.

In particular, an artificial neural network system is used to classify the received electromagnetic signal. Preferably, the artificial neural network is trained to classify the received electromagnetic signal via pattern recognition methods applied to the modified measurement signal.

The artificial neural network used to classify the received electromagnetic signal may be the same artificial neural network that complements the measurement signal with the missing information and/or removes perturbations from the measurement signal.

The artificial neural network system may comprise at least one of an autoencoder, a denoising autoencoder, a generative adversarial network and a recurrent neural network. Autoencoders have the advantage that they are suitable for unsupervised machine learning such that a customer may perform the training of the autoencoder on his own. Recurrent neural networks, on the other hand, are especially suitable for classifying electromagnetic signals with discrete frequency bands that vary over time ("frequency hopper").

According to another aspect, the neural network system is trained with valid and complete signal patterns. In other words, the artificial neural network system is fed with training signals that resemble real measurement signals but without any information missing. In the training procedure, the artificial neural network system is enabled to complement the measurement signal with the missing information and/or remove the perturbations from the measurement signal.

In another embodiment of the invention, the valid and complete signal patterns are selected from a predetermined set of patterns of electromagnetic signals to be measured. Put another way, the artificial neural network system is fed with training data that corresponds to electromagnetic signals with desired characteristics. This way, the artificial neural network system is efficiently trained to (only) identify electromagnetic signals with specific, predetermined characteristics.

According to one aspect, the neural network system is trained with at least partially labelled data. This means that at least a part of the training data comprises additional information about what kind of measurement signal the training signal corresponds to. Training with at least partially labelled training data may also be referred to as "supervised learning".

Alternatively, the neural network system may be trained with unlabelled data. Such unlabelled data is sufficient if, for example, the artificial neural network system comprises an autoencoder or a denoising autoencoder. Training with unlabelled training data may also be referred to as "unsupervised learning", which may also be performed by a customer on his own, as no complex data base of electromagnetic signals is needed.

Whether (partially) labelled or unlabelled training data is used depends on the kind of artificial neural network system and the machine learning method employed.

According to the invention, the problem is also solved by an analysing system for classifying electromagnetic signals according to claim 12.

The artificial neural network system may be used to remove perturbations from the measurement signal, wherein the neural network system is configured to remove the perturbations from the measurement signal by applying pattern recognition techniques to the measurement signal.

With regards to the advantages of the various embodiments of the analysing system according to the invention, reference is made to the explanations given above regarding the method according to the invention. The same features and advantages also apply for the analysing system.

In one embodiment, the machine learning module comprises at least one of an autoencoder, a denoising autoencoder, a generative adversarial network and a recurrent neural network.

The machine learning module may be trained with valid and complete signal patterns, in particular wherein at least one of the classification and the complementation of the received electromagnetic signal is based on pattern recognition.

In particular, the analysing system is configured to perform the method mentioned above.

The foregoing aspects and many of the attendant advantages of the claimed subject matter will become more readily appreciated as the same become better understood by reference to the following detailed description, when taken in conjunction with the accompanying drawings, wherein:
- Figure 1 shows a schematic view of an analyzing system according to the invention;
- Figure 2 shows a schematic flow chart of a method according to the invention;
- Figure 3 shows a diagram of a measurement signal; and
- Figure 4 shows a detailed view of one step of the method of Figure 2.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

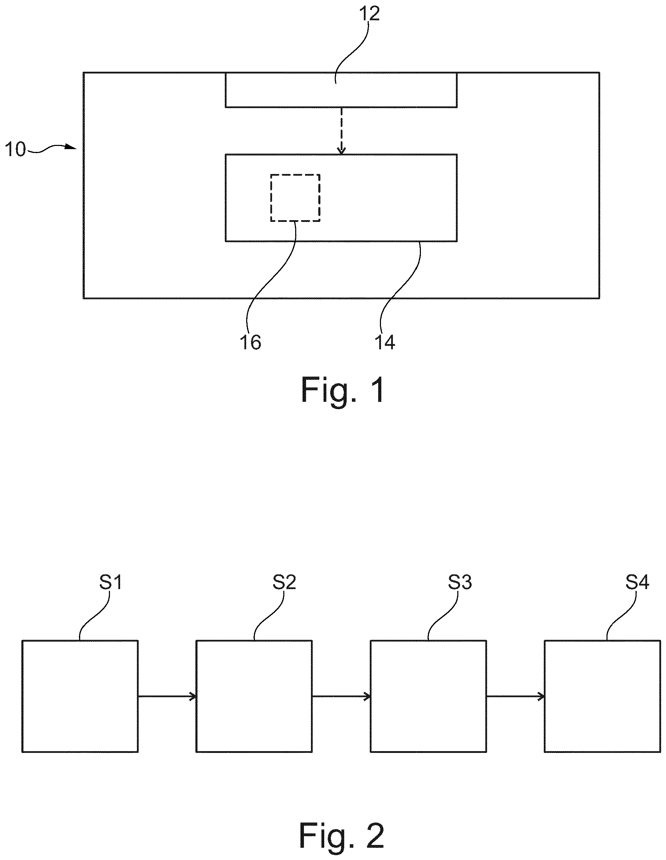

Figure 1 shows a schematic view of an analysing system 10 for classifying electromagnetic signals, in particular radar signals.

The analysing system 10 comprises at least one antenna 12 that is configured to receive electromagnetic waves. Accordingly, a receiver is provided.

Additional antennas may be provided, in particular antennas with main receiving directions that are different from each other and/or adjustable.

The antenna 12 may be configured to receive electromagnetic waves only in one or more predetermined frequency bands, in particular in frequency bands suitable for radar applications.

The analysing system 10 further comprises a classification unit 14 that is connected to the antenna 12 in a signal transmitting manner so that signals received by the antenna 12 can be forwarded to the classification unit 14.

The classification unit 14 is configured to classify the electromagnetic signal received via the at least one antenna 12. In particular, the classification unit 14 is configured to perform a method for classifying electromagnetic signals, which is described in more detail in the following.

First, an electromagnetic signal is received via the antenna 12 and forwarded to the classification unit 14 (step S1).

In a particular embodiment, the electromagnetic signal may be a radar-signal.

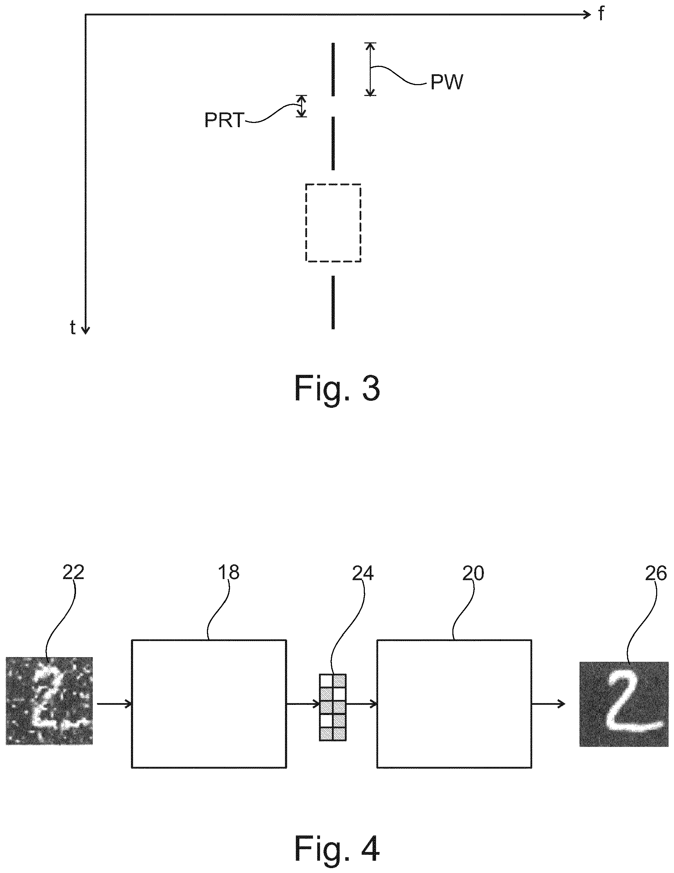

As a next step, a measurement signal is generated from the electromagnetic signal (step S2), in particular by the classification unit 14. An example for such a measurement signal is depicted in Figure 3, where the measurement signal is schematically plotted over frequency f and time t.

The measurement signal comprises at least one of the following pieces of information about the electromagnetic signal: radio frequency (f), pulse width (PW), pulse repetition time (PRT) and direction of arrival.

The direction of arrival as piece of information may be obtained by the respective main receiving direction of the antenna 12 measuring the respective electromagnetic signal.

The measurement signal may further comprise information about a time evolution of one or more of these quantities. Thus, the measurement signal may be represented as a so-called waterfall-diagram as shown in Figure 3.

Due to measurement uncertainties, missed parts of the electromagnetic signal and/or perturbations during the measurement process, the measurement signal may be incomplete (depicted by the dashed square in Figure 3), such that a reliable classification of the electromagnetic signal with conventional methods may be impeded or even hindered.

For example, the measurement signal may at least partly lack one of the pieces of information mentioned above, i.e. radio frequency, pulse width, pulse repetition time and direction of arrival.

Moreover, the measurement signal may comprise perturbations that blanket or rather disturb the signal to be measured. Such perturbations may be interferences, background noise, glitches, or other kinds of distortions of the measurement signal.

Therefore, the measurement signal is now complemented with the missing information and perturbations are removed from the measurement signal by using at least one machine learning module 16 (step S3), thereby generating a modified measurement signal from the measurement signal.

The machine learning module 16 may be a microcontroller comprised in the classification unit 14 (indicated by the dashed square in Figure 1) and/or a program code block of a program running on the classification unit 14.

The machine learning module 16 comprises an artificial neural network system that is fed with the measurement signal.

The artificial neural network system in turn is trained to complement the measurement signal with the missing information and to remove the perturbations from the measurement signal.

The artificial neural network system may be trained to complement the measurement signal by recognising patterns in the measurement signal, in particular patterns with regard to radio frequency, pulse width, pulse repetition time, direction of arrival and/or a time evolution of these quantities.

The artificial neural network system may comprise an autoencoder, a denoising autoencoder, a generative adversarial network and/or a recurrent neural network being trained to complement the measurement signal and/or remove the perturbations from the measurement signal in the way described above.

More details of the procedure of step S3 are depicted in Figure 4 using the example of a (denoising) autoencoder comprising an encoder 18 as well as a decoder 20.

The encoder 18 is fed with the measurement signal. For a better understanding of the underlying principle, the measurement signal is represented by a noisy input 22 of the number "2".

The encoder 18 generates a compressed representation 24 from the noisy input 22. The compressed representation 24 is then fed to the decoder 20, which generates a denoised output 26 from the compressed representation 24. The denoised output 26 corresponds to the modified measurement signal.

As can be seen from this example, the autoencoder restores information that is missing or at least distorted in the measurement signal to generate the modified measurement signal.

Subsequently to step S3, the electromagnetic signal is classified based on the modified measurement signal (step S4). In particular, the final classification may be performed via an artificial neural network system, preferably via the artificial neural network system used for generating the modified measurement signal.

The artificial neural network system may be configured to classify the measurement signal by applying pattern recognition techniques to the modified measurement signal.

So that the artificial neural network system is able to reliably complement the measurement signal with missing information, remove perturbations from the measurement signal and/or correctly classify the electromagnetic signal, it has to be trained before usage.

For this purpose, the artificial neural network system is fed with training signals corresponding to valid and complete electromagnetic signals, in particular the respective signal patterns. In other words, the training signals correspond to electromagnetic signals that shall be measured and classified with the analysing system 10.

The training signals may be selected from a predetermined set of signal patterns with regard to radio frequency, pulse width, pulse repetition time, direction of arrival and/or time evolution of these quantities, such that the training signals correspond to electromagnetic signals to be measured during use of the analysing system 10.

The training signals may at least partially be labelled, i.e. at least a part of the training data comprises additional information about what kind of measurement signal the training signal corresponds to. Training with at least partially labelled training data may also be referred to as "supervised learning".

Alternatively, the training signals may be unlabelled. Such unlabelled data is sufficient if, for example, the artificial neural network system comprises an autoencoder or a denoising autoencoder. Training with unlabelled training data may also be referred to as "unsupervised learning".

During training, weighting factors of the artificial neural network system may be adjusted according to any machine learning technique known from the state of the art that is suitable for the artificial neural network(s) comprised in the machine learning module 16.

## Claims

1. A method for classifying electromagnetic signals, comprising the following steps:
- receiving an electromagnetic signal;
- generating a measurement signal from the received electromagnetic signal;
- complementing the measurement signal with information missing in the measurement signal to provide a modified measurement signal by using at least one machine learning module (16), such that information about the signal is added to the measurement signal and/or missing parts of the measurement signal are added; and
- classifying the received electromagnetic signal based on the modified measurement signal,
wherein the at least one machine learning module (16) comprises an artificial neural network system that is used to complement the measurement signal, wherein the neural network system is configured to complement the measurement signal by applying pattern recognition techniques to the measurement signal.

2. The method of claim 1, **characterized in that** perturbations are removed from the measurement signal to provide the modified measurement signal by using the at least one machine learning module (16), wherein the artificial neural network system is used to remove the perturbations from the measurement signal, and wherein the neural network system is configured to remove the perturbations from the measurement signal by applying pattern recognition techniques to the measurement signal.

3. The method according to claim 1 or 2, **characterized in that** the electromagnetic signal is a radar-signal.

4. The method according to any one of the preceding claims, **characterized in that** the measurement signal comprises one or more pieces of information selected from the group of radio frequency, pulse width, pulse repetition time and direction of arrival.

5. The method according to any one of the preceding claims, **characterized in that** the information added to the measurement signal is selected from the group of radio frequency, pulse width, pulse repetition time and direction of arrival.

6. The method according to any of the preceding claims, **characterized in that** an artificial neural network system is used to classify the received electromagnetic signal.

7. The method according to any one of the preceding claims, **characterized in that** the artificial neural network system comprises at least one of an autoencoder, a denoising autoencoder, a generative adversarial network and a recurrent neural network.

8. The method according to any one of the preceding claims, **characterized in that** the neural network system is trained with valid and complete signal patterns.

9. The method according to claim 8, **characterized in that** the valid and complete signal patterns are selected from a predetermined set of patterns of electromagnetic signals to be measured.

10. The method according to claim 8 or 9, **characterized in that** the neural network system is trained with at least partially labelled data.

11. The method according to claim 8 or 9, **characterized in that** the neural network system is trained with unlabelled data.

12. An analysing system (10) for classifying electromagnetic signals, in particular for classifying radar-signals, comprising at least one antenna (12) and at least one classification unit (14), wherein
the antenna (12) is configured to receive an electromagnetic signal to be measured and to forward the electromagnetic signal to the classification unit (14), wherein
the classification unit (14) is configured to generate a measurement signal from the electromagnetic signal and to classify the received electromagnetic signal using a machine learning module (16), wherein
the machine learning module (16) is configured to complement the measurement signal prior to classification of the received electromagnetic signal, wherein the measurement signal is complemented with information missing in the measurement signal to provide a modified measurement signal, such that information about the signal is added to the measurement signal and/or missing parts of the measurement signal are added,
wherein the at least one machine learning module (16) comprises an artificial neural network system that is used to complement the measurement signal, wherein the neural network system is configured to complement the measurement signal by applying pattern recognition techniques to the measurement signal.

13. The analysing system (10) according to claim 12, **characterized in that** the artificial neural network system is used to remove perturbations from the measurement signal, wherein the neural network system is configured to remove the perturbations from the measurement signal by applying pattern recognition techniques to the measurement signal.

14. The analysing system (10) according to claim 12 or 13, **characterized in that** the machine learning module (16) comprises at least one of an autoencoder, a denoising autoencoder, a generative adversarial network and a recurrent neural network.

15. The analysing system (10) according to any one of the claims 12 to 14, **characterized in that** the machine learning module (16) is trained with valid and complete signal patterns, in particular wherein the classification of the received electromagnetic signal and the complementation of the measurement signal are based on pattern recognition.

## Patentansprüche

1. Verfahren zum Klassifizieren elektromagnetischer Signale, umfassend die folgenden Schritte:
- Empfangen eines elektromagnetischen Signals;
- Erzeugen eines Messsignals von dem empfangenen elektromagnetischen Signal;
- Ergänzen des Messsignals mit Informationen, die in dem Messsignal fehlen, um ein modifiziertes Messsignal durch Verwenden mindestens eines Maschinenlernmoduls (16) derart bereitzustellen, dass Informationen über das Signal zu dem Messsignal hinzugefügt werden und/oder fehlende Teile des Messsignals hinzugefügt werden; und
- Klassifizieren des empfangenen elektromagnetischen Signals basierend auf dem modifizierten Messsignal,
wobei das mindestens eine Maschinenlernmodul (16) ein künstliches neuronales Netzwerksystem umfasst, das verwendet wird, um das Messsignal zu ergänzen, wobei das neuronale Netzwerksystem konfiguriert ist, um das Messsignal durch ein Anwenden von Mustererkennungstechniken auf das Messsignal zu ergänzen.

2. Verfahren nach Anspruch 1, **dadurch gekennzeichnet, dass** Störungen von dem Messsignal entfernt werden, um das modifizierte Messsignal durch Verwenden des mindestens einen Maschinenlernmoduls (16) bereitzustellen, wobei das künstliche neuronale Netzwerksystem verwendet wird, um die Störungen von dem Messsignal zu entfernen, und wobei das neuronale Netzwerksystem konfiguriert ist, um die Störungen von dem Messsignal durch das Anwenden von Mustererkennungstechniken auf das Messsignal zu entfernen.

3. Verfahren nach Anspruch 1 oder 2, **dadurch gekennzeichnet, dass** das elektromagnetische Signal ein Radarsignal ist.

4. Verfahren nach einem der vorstehenden Ansprüche,
**dadurch gekennzeichnet, dass** das Messsignal ein oder mehrere Informationselemente umfasst, die aus der Gruppe von Hochfrequenz, Impulsbreite, Impulswiederholzeit und Ankunftsrichtung ausgewählt sind.

5. Verfahren nach einem der vorstehenden Ansprüche,
**dadurch gekennzeichnet, dass** die Informationen, die zu dem Messsignal hinzugefügt werden, aus der Gruppe von Hochfrequenz, Impulsbreite, Impulswiederholzeit und Ankunftsrichtung ausgewählt sind.

6. Verfahren nach einem der vorstehenden Ansprüche,
**dadurch gekennzeichnet, dass** ein künstliches neuronales Netzwerksystem verwendet wird, um das empfangene elektromagnetische Signal zu klassifizieren.

7. Verfahren nach einem der vorstehenden Ansprüche,
**dadurch gekennzeichnet, dass** das künstliche neuronale Netzwerksystem mindestens eines von einem Autocodierer, einem Entrauschungsautocodierer, einem Generative Adversarial Network und einem Recurrent Neural Network umfasst.

8. Verfahren nach einem der vorstehenden Ansprüche,
**dadurch gekennzeichnet, dass** das neuronale Netzsystem mit gültigen und vollständigen Signalmustern trainiert wird.

9. Verfahren nach Anspruch 8, **dadurch gekennzeichnet, dass** die gültigen und vollständigen Signalmuster von einem zuvor bestimmten Satz von Mustern von zu messenden elektromagnetischen Signalen ausgewählt sind.

10. Verfahren nach Anspruch 8 oder 9, **dadurch gekennzeichnet, dass** das neuronale Netzsystem mit mindestens teilweise markierten Daten trainiert wird.

11. Verfahren nach Anspruch 8 oder 9, **dadurch gekennzeichnet, dass** das neuronale Netzsystem mit unmarkierten Daten trainiert wird.

12. Analysesystem (10) zum Klassifizieren elektromagnetischer Signale, insbesondere zum Klassifizieren von Radarsignalen, umfassend mindestens eine Antenne (12) und mindestens eine Klassifizierungseinheit (14), wobei
die Antenne (12) konfiguriert ist, um ein zu messendes elektromagnetisches Signal zu empfangen und das elektromagnetische Signal an die Klassifizierungseinheit (14) weiterzuleiten, wobei
die Klassifizierungseinheit (14) konfiguriert ist, um von dem elektromagnetischen Signal ein Messsignal zu erzeugen und das empfangene elektromagnetische Signal unter Verwendung eines Maschinenlernmoduls (16) zu klassifizieren, wobei
das Maschinenlernmodul (16) konfiguriert ist, um das Messsignal vor der Klassifizierung des empfangenen elektromagnetischen Signals zu ergänzen, wobei das Messsignal mit Informationen ergänzt wird, die in dem Messsignal fehlen, um ein modifiziertes Messsignal derart bereitzustellen, dass Informationen über das Signal zu dem Messsignal hinzugefügt werden und/oder fehlende Teile des Messsignals hinzugefügt werden,
wobei das mindestens eine Maschinenlernmodul (16) ein künstliches neuronales Netzwerksystem umfasst, das verwendet wird, um das Messsignal zu ergänzen, wobei das neuronale Netzwerksystem konfiguriert ist, um das Messsignal durch ein Anwenden von Mustererkennungstechniken auf das Messsignal zu ergänzen.

13. Analysesystem (10) nach Anspruch 12, **dadurch gekennzeichnet, dass** das künstliche neuronale Netzwerksystem verwendet wird, um Störungen von dem Messsignal zu entfernen, wobei das neuronale Netzwerksystem konfiguriert ist, um Störungen von dem Messsignal durch das Anwenden von Mustererkennungstechniken auf das Messsignal zu entfernen.

14. Analysesystem (10) nach Anspruch 12 oder 13,
**dadurch gekennzeichnet, dass** das Maschinenlernmodul (16) mindestens eines von einem Autocodierer, einem Entrauschungsautocodierer, einem Generative Adversarial Network und einem Recurrent Neural Network umfasst.

15. Analysesystem (10) nach einem der Ansprüche 12 bis 14,
**dadurch gekennzeichnet, dass** das Maschinenlernmodul (16) mit gültigen und vollständigen Signalmustern trainiert wird, insbesondere wobei die Klassifizierung des empfangenen elektromagnetischen Signals und die Ergänzung des Messsignals auf Mustererkennung basieren.

## Revendications

1. Procédé de classification des signaux électromagnétiques, comprenant les étapes suivantes :
- la réception d'un signal électromagnétique ;
- la génération d'un signal de mesure à partir du signal électromagnétique reçu ;
- la complémentation du signal de mesure par des informations manquantes dans le signal de mesure pour fournir un signal de mesure à l'aide d'au moins un module d'apprentissage automatique (16), de telle sorte que des informations sur le signal sont ajoutées au signal de mesure et/ou que des parties manquantes du signal de mesure sont ajoutées ; et
- la classification du signal électromagnétique reçu en fonction du signal de mesure modifié,
dans lequel l'au moins un module d'apprentissage automatique (16) comprend un système de réseau neuronal artificiel qui est utilisé pour compléter le signal de mesure, dans lequel le système de réseau neuronal est configuré pour compléter le signal de mesure en appliquant des techniques de reconnaissance des formes au signal de mesure.

2. Procédé selon la revendication 1, **caractérisé en ce que** des perturbations sont éliminées du signal de mesure pour fournir le signal de mesure modifié à l'aide de l'au moins un module d'apprentissage automatique (16), dans lequel le système de réseau neuronal artificiel est utilisé pour éliminer les perturbations du signal de mesure, et dans lequel le système de réseau neuronal est configuré pour éliminer les perturbations du signal de mesure en appliquant des techniques de reconnaissance des formes au signal de mesure.

3. Procédé selon la revendication 1 ou 2, **caractérisé en ce que** le signal électromagnétique est un signal radar.

4. Procédé selon l'une quelconque des revendications précédentes, **caractérisé en ce que** le signal de mesure comprend une ou plusieurs informations choisies parmi le groupe comprenant fréquence radio, largeur d'impulsion, temps de répétition des impulsions et direction d'arrivée.

5. Procédé selon l'une quelconque des revendications précédentes, **caractérisé en ce que** les informations ajoutées au signal de mesure sont choisies parmi le groupe comprenant fréquence radio, largeur d'impulsion, temps de répétition des impulsions et direction d'arrivée.

6. Procédé selon l'une quelconque des revendications précédentes, **caractérisé en ce qu'**un système de réseau neuronal artificiel est utilisé pour classer le signal électromagnétique reçu.

7. Procédé selon l'une quelconque des revendications précédentes, **caractérisé en ce que** le système de réseau neuronal artificiel comprend au moins un autoencodeur, un autoencodeur de débruitage, un réseau antagoniste génératif et un réseau neuronal récurrent.

8. Procédé selon l'une quelconque des revendications précédentes, **caractérisé en ce que** le système de réseau neuronal est entraîné avec des formes de signaux valides et complètes.

9. Procédé selon la revendication 8, **caractérisé en ce que** les formes de signaux valides et complètes sont choisies à partir d'un ensemble prédéterminé de formes de signaux électromagnétiques à mesurer.

10. Procédé selon la revendication 8 ou 9, **caractérisé en ce que** le système de réseau neuronal est entraîné avec des données au moins partiellement étiquetées.

11. Procédé selon la revendication 8 ou 9, **caractérisé en ce que** le système de réseau neuronal est entraîné avec des données non étiquetées.

12. Système d'analyse (10) pour la classification des signaux électromagnétiques, en particulier pour la classification des signaux radar, comprenant au moins une antenne (12) et au moins une unité de classification (14), dans lequel
l'antenne (12) est configurée pour recevoir un signal électromagnétique à mesurer et pour transmettre le signal électromagnétique à l'unité de classification (14), dans lequel
l'unité de classification (14) est configurée pour générer un signal de mesure à partir du signal électromagnétique et pour classer le signal électromagnétique reçu à l'aide d'un module d'apprentissage automatique (16), dans lequel
le module d'apprentissage automatique (16) est configuré pour compléter le signal de mesure avant la classification du signal électromagnétique reçu, dans lequel le signal de mesure est complété par des informations manquantes dans le signal de mesure pour fournir un signal de mesure modifié, de telle sorte que des informations sur le signal sont ajoutées au signal de mesure et/ou que des parties manquantes du signal de mesure sont ajoutées,
dans lequel l'au moins un module d'apprentissage automatique (16) comprend un système de réseau neuronal artificiel qui est utilisé pour compléter le signal de mesure, dans lequel le système de réseau neuronal est configuré pour compléter le signal de mesure en appliquant des techniques de reconnaissance des formes au signal de mesure.

13. Système d'analyse (10) selon la revendication 12, **caractérisé en ce que** le système de réseau neuronal artificiel est utilisé pour éliminer les perturbations du signal de mesure, dans lequel le système de réseau neuronal étant configuré pour éliminer les perturbations du signal de mesure en appliquant des techniques de reconnaissance des formes au signal de mesure.

14. Système d'analyse (10) selon la revendication 12 ou 13, **caractérisé en ce que** le module d'apprentissage automatique (16) comprend au moins un autoencodeur, un autoencodeur de débruitage, un réseau antagoniste génératif et un réseau neuronal récurrent.

15. Système d'analyse (10) selon l'une quelconque des revendications 12 à 14, **caractérisé en ce que** le module d'apprentissage automatique (16) est entraîné avec des formes de signaux valides et complètes, en particulier dans lequel la classification du signal électromagnétique reçu et la complémentation du signal de mesure sont en fonction de la reconnaissance des formes.
